# FASCICULE DE BREVET EUROPEEN

(11) **EP 3 850 727 B1**
(45) Date de publication et mention de la délivrance du brevet: **12.10.2022**
(21) Numéro de dépôt: 19742056.5
(22) Date de dépôt: 24.07.2019
(51) Int. Cl.: H02K 5/15, H02K 5/173, H02K 7/116

(54) **MACHINE ÉLECTRIQUE TOURNANTE MUNIE D'UN PALIER RÉALISÉ À PARTIR DE DEUX PARTIES SURMOULÉES**
ROTIERENDE ELEKTRISCHE MASCHINE MIT EINEM AUS ZWEI ÜBERGOSSENEN TEILEN HERGESTELLTEN LAGER
ROTATING ELECTRICAL MACHINE PROVIDED WITH A BEARING PRODUCED FROM TWO OVERMOULDED PARTS

(30) Priorité: 14.09.2018 FR 1858300
(43) Date de publication de la demande: 21.07.2021
(73) Titulaire: Valeo Equipements Electriques Moteur, 94046 Créteil Cedex (FR)
(72) Inventeur: LEDIEU, Cédric, 94046 Créteil Cedex (FR); LABROSSE, Jean-Claude, 94046 Créteil Cedex (FR)
(74) Mandataire: Valeo Powertrain Systems
(86) Numéro de dépôt international: PCT/EP2019/069861
(87) Numéro de publication internationale: WO 2020/052843

(56) Documents cités:
- WO-A1-2017/121930
- FR-A1- 2 938 131
- FR-A1- 3 058 588

## Description

La présente invention porte sur une machine électrique tournante munie d'un palier réalisé à partir de deux parties surmoulées. L'invention trouve une application particulièrement avantageuse, mais non exclusive, avec les machines électriques réversibles de forte puissance pouvant fonctionner en mode alternateur et en mode moteur accouplées avec un élément réducteur. De façon connue en soi, les machines électriques tournantes comportent un stator et un rotor solidaire d'un arbre. Le stator est monté dans un carter configuré pour porter à rotation l'arbre sur des paliers par l'intermédiaire de roulements.

Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir un bobinage. Le bobinage est obtenu par exemple à partir d'un fil continu recouvert d'émail ou à partir d'éléments conducteurs en forme d'épingles reliées entre elles par soudage. Le bobinage comporte des enroulements de phase connectés en étoile ou en triangle dont les sorties sont reliées à un module électronique de commande. Dans certains types de chaînes de traction de véhicule automobile assurant la transmission de la puissance mécanique du moteur thermique vers les roues du véhicule, une machine électrique tournante réversible de forte puissance peut être accouplée à un élément réducteur. L'élément réducteur peut prendre la forme d'une boîte de vitesses du véhicule ou d'un réducteur monté sur un train du véhicule et relié mécaniquement à la machine électrique tournante.

Le document FR 3 058 588 divulgue une machine électrique avec un palier comprenant un logement pour recevoir un palier d'arbre assurant un guidage en rotation de l'arbre, le palier comprenant un logement pour recevoir le palier d'arbre, une interface pour monter un palier d'un pignon externe de la machine électrique tournante, une paroi transversale et une jupe émergeant de la paroi transversale et entourant au moins partiellement le stator.

Afin d'assurer l'accouplement entre la machine électrique et l'élément réducteur, un pignon porté par l'arbre de la machine électrique engrène avec un pignon porté par l'élément réducteur via un pignon intermédiaire monté sur un palier de la machine électrique. A cet effet, le palier comporte une interface de montage du roulement du pignon intermédiaire. Des simulations mécaniques du fonctionnement du système ont mis en évidence la présence d'efforts axiaux, radiaux, et tangentiels difficilement supportables par le palier, en particulier lorsque ce dernier est réalisé entièrement en aluminium qui est un matériau peu résistant.

La présente invention vise à remédier efficacement à cet inconvénient en proposant une machine électrique tournante selon la revendication 1, notamment pour véhicule automobile, comportant:
- un arbre,
- un rotor monté sur l'arbre,
- un stator, notamment entourant le rotor,
- un palier comportant un logement de réception d'un roulement d'arbre assurant un guidage en rotation de l'arbre,
caractérisée en ce que le palier comporte:
- une première partie réalisée dans un premier matériau comportant:
   - le logement de réception du roulement d'arbre,
   - une interface de montage d'un roulement d'un pignon externe à la machine électrique tournante, et
- une deuxième partie réalisée dans un deuxième matériau comportant:
   - une paroi transversale, et
   - une jupe issue de la paroi transversale entourant au moins partiellement le stator,
- la deuxième partie étant surmoulée sur la première partie de sorte à former un palier résistant.

L'invention permet ainsi de renforcer mécaniquement la zone du palier comportant les portées de roulement pour le pignon de l'arbre de la machine électrique et le pignon en prise avec l'élément réducteur, afin de pouvoir supporter les efforts subis lors du fonctionnement de l'ensemble.

Selon une réalisation, la première partie est réalisée dans un matériau plus résistant que le matériau de la deuxième partie.

Selon une réalisation, la première partie est réalisée en acier.

Selon une réalisation, la deuxième partie est réalisée en aluminium.

Selon une réalisation, l'interface de montage s'étend en saillie pour s'insérer à l'intérieur d'une bague interne du roulement du pignon correspondant.

Selon une réalisation, le logement de réception du roulement d'arbre de la première partie est configuré pour recevoir une bague externe du roulement d'arbre.

Selon une réalisation, la première partie comporte sur sa face arrière une alternance de nervures et de creusures.

Selon une réalisation, la paroi transversale est munie d'ouvertures pour le passage d'extrémités de phases du stator.

L'invention a également pour objet un ensemble comportant une machine électrique tournante telle que précédemment définie.

Selon une réalisation, l'élément réducteur est une boîte de vitesses de véhicule automobile.

Selon une réalisation, l'élément réducteur est un réducteur monté sur un train du véhicule et accouplé à la machine électrique tournante.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective illustrant l'accouplement entre un élément réducteur et la machine électrique tournante selon la présente invention;
La figure 2 est une vue en coupe longitudinale de la machine électrique tournante selon l'invention;
La figure 3 est une vue en perspective du palier avant en deux parties de la machine électrique selon la présente invention;
Les figures 4a et 4b sont des vues en perspective de la première partie formant le palier avant de la machine électrique tournante selon l'invention;
La figure 5 est une vue en perspective de la deuxième partie formant le palier avant de la machine électrique tournante selon l'invention.

Les éléments identiques, similaires, ou analogues, conservent la même référence d'une figure à l'autre.

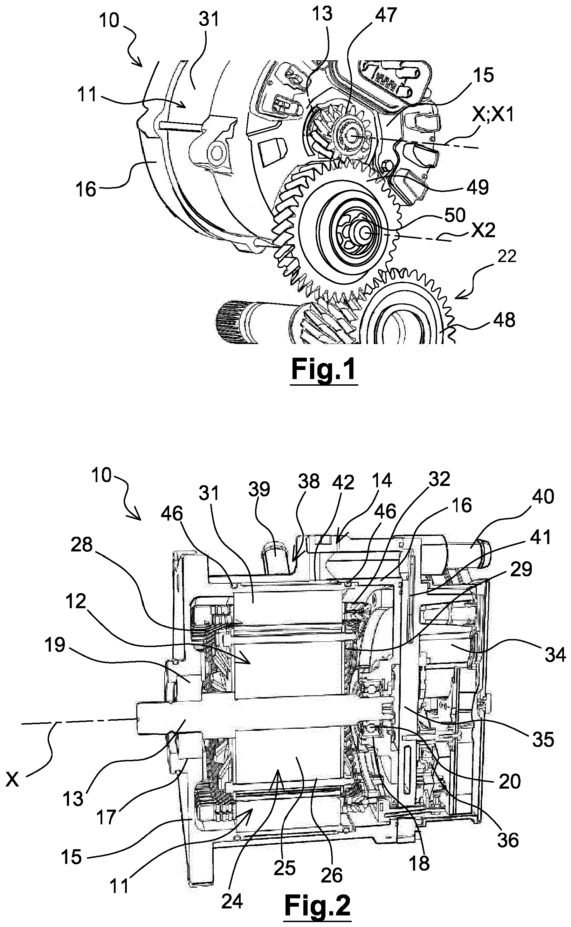

Dans la suite de la description, on considère une orientation d'avant vers l'arrière, une orientation allant de gauche à droite sur la figure 2. Ainsi, on entend par un élément "avant", un élément situé du côté du roulement avant 19 et par élément "arrière" un élément situé du côté opposé.

Les figures 1 et 2 montrent une machine électrique tournante 10 comportant un stator 11 polyphasé entourant un rotor 12 monté sur un arbre 13 d'axe X correspondant à l'axe de la machine électrique 10. Le stator 11 entoure le rotor 12 avec présence d'un entrefer entre la périphérie interne du stator 11 et la périphérie externe du rotor 12. Le stator 11 est monté dans un carter 14 comportant un palier avant 15 et un palier arrière 16. Le palier avant 15 et le palier arrière 16 comportent chacun un logement de réception 17, 18 d'un roulement 19, 20 correspondant qui assure un guidage en rotation de l'arbre 13.

Cette machine électrique 10 est destinée à être accouplée à un élément réducteur de vitesse 22. L'élément réducteur 22 pourra prendre la forme d'une boîte de vitesses de véhicule automobile ou d'un réducteur monté sur un train du véhicule et accouplé à la machine électrique tournante 10.

La machine électrique 10 est apte à fonctionner dans un mode alternateur pour fournir notamment de l'énergie à la batterie et au réseau de bord du véhicule, et dans un mode moteur, pour assurer le démarrage du moteur thermique du véhicule, et le cas échéant pour participer à la traction du véhicule seule ou en combinaison avec le moteur thermique. La puissance de la machine pourra par exemple être comprise entre 15kW et 50kW.

Plus précisément, comme visible sur la figure 2, le rotor 12 comporte un corps 24 sous la forme d'un paquet de tôles. Des aimants permanents 25 sont implantés dans des cavités 26 du corps 24. Les aimants 25 pourront être en terre rare ou en ferrite selon les applications et la puissance recherchée de la machine électrique 10.

En outre, le rotor 12 comporte deux flasques 28, 29 plaqués chacun contre une face d'extrémité axiale du rotor 12. Ces flasques 28, 29 assurent une retenue axiale des aimants 25 et servent également à équilibrer le rotor 12.

Par ailleurs, le stator 11 comporte un corps 31 constitué par un paquet de tôles ainsi qu'un bobinage 32. Le corps 31 est formé par un empilement de feuilles de tôles maintenues sous forme de paquet au moyen d'un système de fixation adapté, tel que des rivets.

Le corps de stator 11 est muni de dents délimitant des encoches pour le montage du bobinage 32. Le bobinage 32 comporte un ensemble d'enroulements de phase traversant les encoches et formant des chignons s'étendant en saillie de part et d'autre du corps de stator 11. Le bobinage 32 est obtenu ici à partir d'éléments conducteurs en forme d'épingles reliés entre eux par exemple par soudage. Le bobinage 32 comporte des enroulements de phase de type double triphasés connectés en étoile et/ou en triangle. Des sorties de phase sont destinées à être reliées à un module électronique de commande 34.

Le module électronique de commande 34 comporte un dissipateur thermique 35 sur lequel sont fixés notamment des modules de puissance 36, par exemple par vissage. Ces modules de puissance 36 intègrent de façon connue en soi des interrupteurs, prenant par exemple la forme de transistors de type MOS, permettant d'assurer une commande des phases de la machine électrique tournante 10 en mode moteur ou en mode alternateur. La commutation de ces transistors est pilotée par une unité de contrôle. Le module électronique de commande 34 est monté plaqué, via le dissipateur thermique 35, contre la face arrière d'une paroi transversale du palier arrière 16.

Avantageusement, la machine électrique 10 comporte un circuit de refroidissement 38 ayant une entrée 39 et d'une sortie 40 de liquide de refroidissement, tel qu'un liquide à base d'eau ou d'huile. Le circuit de refroidissement 38 présente une chambre de refroidissement 41 ménagée dans la masse du dissipateur thermique 35 et une chambre de refroidissement 42 entourant le stator 11.

La chambre de refroidissement 42 pourra être délimitée par la périphérie externe d'une paroi annulaire du palier avant 15 et la périphérie interne d'une paroi annulaire du palier arrière 16. Cette chambre de refroidissement 42 est fermée à ses extrémités axiales par deux joints 46 de type torique. Le stator 11 est monté fretté à l'intérieur du palier avant 15 de manière à établir un contact intime entre la périphérie externe du corps de stator 31 et la périphérie interne de la paroi latérale du palier avant 15.

En variante, le stator 11 est monté serré entre le palier avant 15 et le palier arrière 16 à l'aide de tirants de fixation, comme montré sur la figure 1. La périphérie externe du corps de stator 31 à nu pourra être directement en contact avec un liquide de refroidissement.

Comme on peut le voir sur la figure 1, afin d'assurer un accouplement entre la machine électrique 10 et l'élément réducteur 22, un pignon 47 porté par l'arbre de la machine électrique 10 engrène avec un pignon 48 porté par l'élément réducteur 22 via un pignon intermédiaire 49 monté sur le palier avant 15. A cet effet, le palier avant 15 comporte une interface de montage 51 d'un roulement 50 du pignon intermédiaire 49 externe à la machine électrique 10.

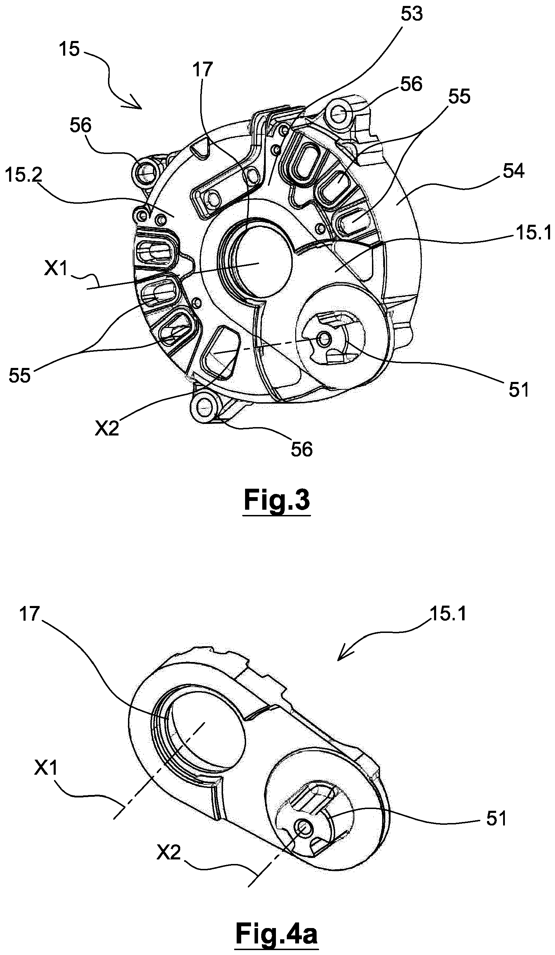

Comme cela est montré sur la figure 3, le palier avant 15 est formé par une première partie 15.1 et une deuxième partie 15.2 surmoulée sur la première partie 15.1 de sorte à former un palier 15. La première partie 15.1 est réalisée avantageusement dans matériau plus résistant que le matériau de la deuxième partie 15.2. Suivant un exemple de réalisation préférentiel, la première partie 15.1 est réalisée en acier, tandis que la deuxième partie 15.2 est réalisée en aluminium.

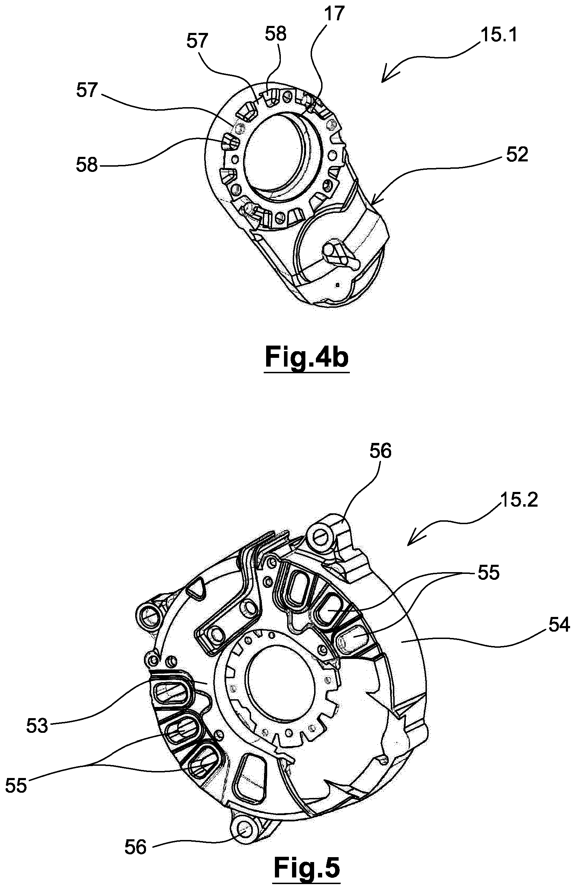

Plus précisément, comme cela est visible sur les figures 4a et 4b, la première partie 15.1 comporte le logement de réception 17 du roulement d'arbre 19, et l'interface de montage 51 du roulement 50 du pignon intermédiaire 49.

Dans l'exemple de réalisation, le logement de réception 17 de la première partie 15.1 est configuré pour recevoir une bague externe du roulement d'arbre 19. L'interface de montage 51 s'étend en saillie pour s'insérer à l'intérieur d'une bague interne du roulement 50 du pignon intermédiaire 49. En variante, l'interface de montage 51 pourra comporter un logement de réception de la bague externe du roulement 50 du pignon intermédiaire 49.

L'interface de montage 51 est déportée radialement par rapport au logement de réception 17 du roulement. Un axe X1 du logement 17 correspondant à l'axe du palier 15 est parallèle à un axe X2 de l'interface de montage 51. L'axe X1 est destiné à être confondu avec l'axe X de la machine électrique tournante 10.

Comme cela est illustré par la figure 5, la deuxième partie 15.2 comporte une paroi transversale 53, et une jupe 54 issue de la paroi transversale 53 entourant au moins partiellement le stator 11. La paroi transversale 53 pourra être munie d'ouvertures 55 pour le passage d'extrémités de phases du stator. La jupe 54 comporte des oreilles 56 saillantes radialement munies d'ouvertures de passage d'organes de fixation.

La première partie 15.1 comporte de préférence sur sa face arrière une alternance de nervures 57 et de creusures 58, tel que montré sur la figure 4b. Ces nervures 57 et ces creusures 58 sont disposées autour du logement de réception 17 du roulement 19. Ces formes visent à améliorer la liaison mécanique entre la première partie 15.1 et la deuxième partie 15.2 du palier 15 en maximisant les surfaces de contact entre ces deux parties 15.1, 15.2.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10), notamment pour véhicule automobile, comportant:
- un arbre (13),
- un rotor (12) monté sur l'arbre (13),
- un stator (11), notamment entourant le rotor (12),
- un palier (15) comportant un logement de réception (17) d'un roulement d'arbre (19) assurant un guidage en rotation de l'arbre (13),
**caractérisée en ce que** le palier (15) comporte:
- une première partie (15.1) réalisée dans un premier matériau comportant:
- le logement de réception (17) du roulement d'arbre (19),
- une interface de montage (51) d'un roulement (50) d'un pignon (49) externe à la machine électrique tournante (10), et
- une deuxième partie (15.2) réalisée dans un deuxième matériau comportant:
- une paroi transversale (53), et
- une jupe (54) issue de la paroi transversale (53) entourant au moins partiellement le stator (11),
- la deuxième partie (15.2) étant surmoulée sur la première partie (15.1) de sorte à former un palier (15) résistant.

2. Machine électrique tournante selon la revendication 1, **caractérisée en ce que** la première partie (15.2) est réalisée dans un matériau plus résistant que le matériau de la deuxième partie (15.1).

3. Machine électrique tournante selon la revendication 1 ou 2, **caractérisée en ce que** la première partie (15.1) est réalisée en acier.

4. Machine électrique tournante selon l'une quelconque des revendications 1 à 3, **caractérisée en ce que** la deuxième partie (15.2) est réalisée en aluminium.

5. Machine électrique tournante selon l'une quelconque des revendications 1 à 4, **caractérisée en ce que** l'interface de montage (51) s'étend en saillie pour s'insérer à l'intérieur d'une bague interne du roulement (50) du pignon (49) correspondant.

6. Machine électrique tournante selon l'une quelconque des revendications 1 à 5, **caractérisée en ce que** le logement de réception (17) du roulement d'arbre (19) de la première partie (15.1) est configuré pour recevoir une bague externe du roulement d'arbre (19).

7. Machine électrique tournante selon l'une quelconque des revendications 1 à 6, **caractérisée en ce que** la première partie (15.1) comporte sur sa face arrière une alternance de nervures (57) et de creusures (58).

8. Machine électrique tournante selon l'une quelconque des revendications 1 à 7, **caractérisée en ce que** la paroi transversale (53) est munie d'ouvertures (55) pour le passage d'extrémités de phases du stator.

9. Ensemble **caractérisé en ce qu'**il comporte une machine électrique tournante (10) telle que définie selon l'une quelconque des revendications précédentes et un élément réducteur (22).

10. Ensemble selon la revendication 9, **caractérisé en ce que** l'élément réducteur (22) est une boîte de vitesses de véhicule automobile.

11. Ensemble selon la revendication 9, **caractérisé en ce que** l'élément réducteur (22) est un réducteur monté sur un train du véhicule et accouplé à la machine électrique tournante (10).

## Patentansprüche

1. Rotierende elektrische Maschine (10), insbesondere für ein Kraftfahrzeug, umfassend:
- eine Welle (13),
- einen auf der Welle (13) montierten Rotor (12),
- einen Stator (11), der insbesondere den Rotor (12) umgibt,
- ein Lager (15) mit einem Sitz (17) zur Aufnahme eines Wälzlagers (19), das eine Drehführung der Welle (13) gewährleistet, **dadurch gekennzeichnet, dass** das Lager (15) Folgendes aufweist:
- einen ersten Teil (15.1), der aus einem ersten Material hergestellt ist und Folgendes aufweist:
- den Aufnahmesitz (17) des Wälzlagers (19),
- eine Schnittstelle (51) zur Montage eines Wälzlagers (50) eines äußeren Zahnrads (49) an der rotierenden elektrischen Maschine (10) und
- einen zweiten Teil (15.2), der aus einem zweiten Material hergestellt ist und Folgendes aufweist:
- eine Querwand (53) und
- eine Schürze (54), die von der Querwand (53) ausgeht und den Stator (11) zumindest teilweise umgibt,
- wobei der zweite Teil (15.2) an den ersten Teil (15.1) angeformt ist, um ein widerstandsfähiges Lager (15) auszubilden.

2. Rotierende elektrische Maschine nach Anspruch 1, **dadurch gekennzeichnet, dass** der erste Teil (15.2) aus einem Material hergestellt ist, das widerstandsfähiger als das Material des zweiten Teils (15.1) ist.

3. Rotierende elektrische Maschine nach Anspruch 1 oder 2, **dadurch gekennzeichnet, dass** der erste Teil (15.1) aus Stahl hergestellt ist.

4. Rotierende elektrische Maschine nach einem der Ansprüche 1 bis 3, **dadurch gekennzeichnet, dass** der zweite Teil (15.2) aus Aluminium hergestellt ist.

5. Rotierende elektrische Maschine nach einem der Ansprüche 1 bis 4, **dadurch gekennzeichnet, dass** sich die Montageschnittstelle (51) vorspringend erstreckt, um in das Innere eines Innenrings des Wälzlagers (50) des entsprechenden Zahnrads (49) zu passen.

6. Rotierende elektrische Maschine nach einem der Ansprüche 1 bis 5, **dadurch gekennzeichnet, dass** der Aufnahmesitz (17) des Wälzlagers (19) des ersten Teils (15.1) zur Aufnahme eines Außenrings des Wälzlagers (19) konfiguriert ist.

7. Rotierende elektrische Maschine nach einem der Ansprüche 1 bis 6, **dadurch gekennzeichnet, dass** der erste Teil (15.1) auf seiner Rückseite abwechselnd Rippen (57) und Vertiefungen (58) aufweist.

8. Rotierende elektrische Maschine nach einem der Ansprüche 1 bis 7, **dadurch gekennzeichnet, dass** die Querwand (53) mit Öffnungen (55) für den Durchgang von Phasenenden des Stators versehen ist.

9. Baugruppe, **dadurch gekennzeichnet, dass** sie eine rotierende elektrische Maschine (10), wie sie nach einem der vorangehenden Ansprüche definiert ist, und ein Reduzierelement (22) umfasst.

10. Baugruppe nach Anspruch 9, **dadurch gekennzeichnet, dass** das Reduzierelement (22) ein Getriebe des Kraftfahrzeugs ist.

11. Baugruppe nach Anspruch 9, **dadurch gekennzeichnet, dass** das Reduzierelement (22) ein Reduzierelement ist, das auf einem Fahrgestell des Fahrzeugs montiert und mit der rotierenden elektrischen Maschine (10) gekoppelt ist.

## Claims

1. Rotary electric machine (10), notably for a motor vehicle, comprising:
- a shaft (13),
- a rotor (12) mounted on the shaft (13),
- a stator (11), notably surrounding the rotor (12),
- a bracket (15) comprising a receiving housing (17) of a shaft rolling bearing (19) guiding the shaft (13) in rotation,
**characterized in that** the bracket (15) comprises:
- a first part (15.1) made of a first material, comprising:
- the receiving housing (17) of the shaft rolling bearing (19),
- a mounting interface (51) for mounting a rolling bearing (50) of a pinion (49) external to the rotary electric machine (10), and
- a second part (15.2) made of a second material, comprising:
- a transverse wall (53), and
- a skirt (54) coming from the transverse wall (53) and at least partially surrounding the stator (11),
- the second part (15.2) being overmoulded on the first part (15.1) so as to form a strong bracket (15).

2. Rotary electric machine according to Claim 1, **characterized in that** the first part (15.2) is made of a material that is stronger than the material of the second part (15.1).

3. Rotary electric machine according to Claim 1 or 2, **characterized in that** the first part (15.1) is made of steel.

4. Rotary electric machine according to any one of Claims 1 to 3, **characterized in that** the second part (15.2) is made of aluminium.

5. Rotary electric machine according to any one of Claims 1 to 4, **characterized in that** the mounting interface (51) protrudes so as to be inserted inside an internal ring of the rolling bearing (50) of the corresponding pinion (49).

6. Rotary electric machine according to any one of Claims 1 to 5, **characterized in that** the receiving housing (17) of the shaft rolling bearing (19) of the first part (15.1) is configured to receive an external ring of the shaft rolling bearing (19).

7. Rotary electric machine according to any one of Claims 1 to 6, **characterized in that** the first part (15.1) comprises, on its rear face, an alternating arrangement of ribs (57) and recesses (58).

8. Rotary electric machine according to any one of Claims 1 to 7, **characterized in that** the transverse wall (53) is equipped with openings (55) for the passage of phase ends of the stator.

9. Assembly **characterized in that** it comprises a rotary electric machine (10) as defined in any one of the preceding claims and a reducing element (22).

10. Assembly according to Claim 9, **characterized in that** the reducing element (22) is a motor vehicle gearbox.

11. Assembly according to Claim 9, **characterized in that** the reducing element (22) is a reducer mounted on an axle system of the vehicle and coupled to the rotary electric machine (10) .
